(19) Europäisches Patentamt
European Patent Office
Office européen des brevets

(11) **EP 4 181 428 A1**

(12) **EUROPEAN PATENT APPLICATION**

(43) Date of publication:
**17.05.2023 Bulletin 2023/20**

(21) Application number: **22206417.2**

(22) Date of filing: **09.11.2022**

(51) International Patent Classification (IPC):
**H04B 10/272** (2013.01) **H04B 10/61** (2013.01)
**H04Q 11/00** (2006.01)

(52) Cooperative Patent Classification (CPC):
**H04B 10/6164; H04B 10/272; H04B 10/6165;
H04Q 11/0067**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.11.2021 CN 202111341673**

(71) Applicant: **Nokia Solutions and Networks Oy
02610 Espoo (FI)**

(72) Inventors:
• HU, Xiaofeng
Shanghai, 201200 (CN)
• ZHANG, Dongxu
Shanghai, 200129 (CN)
• HUANG, Xiaoan
Shanghai, 200000 (CN)
• ZHANG, Kaibin
Shanghai, 201204 (CN)

(74) Representative: **DREISS Patentanwälte PartG
mbB
Friedrichstraße 6
70174 Stuttgart (DE)**

(54) **METHOD AND DEVICE FOR USING PREAMBLES IN THE COMMUNICATION FROM AN OLT TO AN ONU**

(57) The objective of the embodiment of the present application is to provide a method and device for using preamble. The method of the embodiment of the present application comprises: inserting a first preamble and/or a second preamble in the time-domain sequence of a signal to be transmitted to an ONU device, wherein the first preamble is used for frame synchronization and coarse estimation of intermediate frequency, and the second preamble is used for fine correction of frequency and recovery of carrier phase; transmitting the signal containing the first preamble and/or the second preamble to the ONU device. The embodiment of the present application has the following advantages: by inserting two kinds of preambles in the time-domain sequence of a signal to be transmitted to an ONU device to assist the ONU device in frequency and phase estimation, the optical power of the effective signal will not be reduced with the way of inserting preambles in the time-domain sequence; the method according to this embodiment is easy to implement and has low computational complexity.

Fig. 1

**Description**

<u>Technical Field</u>

The present invention relates to the field of communication technology, in particular to a method and device for using preambles.

<u>Background Art</u>

With the exponentially increasing bandwidth demand driven by the development of technologies like 5G mobile backhaul/fronthaul, high-definition video applications, virtual/augmented reality and cloud computing, high-speed passive optical network (PON) is considered to be the most important network segment to provide the last-mile delivery of signals for end users. The next-generation 50G PON standard has been defined in April, 2021 by ITU-T. The 50G PON employs traditional intensity modulation/direct detection (IM/DD) technique with non-return-to-zero (NRZ) on-off-keying (OOK) modulation pattern, and utilizes digital signal processing (DSP) to improve receiver performance.

For even higher data rates, such as 100 Gb/s and beyond, it would be very difficult for the IM/DD scheme to achieve the required power budget due to low receiving sensitivity and the rapidly increasing impact of chromatic dispersion. The coherent detection scheme, on the other hand, has been demonstrated to be able to perfectly recover the linear distortions and effectively improve receiving sensitivity through power amplification of local oscillator (LO). However, it comes at a greater financial cost, which mainly attributes to the highly complex optical devices for polarization and phase diversity. Therefore, the low-cost coherent detection scheme has received wide attention from academia and industry in the recent years. Various simplified coherent receivers have been proposed by many research groups, in which the simplest one is the heterodyne coherent receiver based on Alamouti coding.

It is widely known that the mixing between the received signal and the LO would introduce a frequency and phase offset in the coherent receiver, thereby leading to a rotating ring-shaped constellation diagram. In traditional transmission networks, there already exist many schemes based on the prior art for estimating the frequency offset and carrier phase to correct the frequency and phase error in the received signal. However, these schemes based on the prior art are not suitable for the simplified coherent receiver because not much information can be obtained by this kind of receiver, while all the information including in-phase and quadrature signals in X-polarization and Y-polarization can be obtained in the traditional coherent receiver. That is to say, it is very difficult to extract frequency and phase information in the simplified coherent receiver with the schemes based on the prior art.

<u>Summary of the Invention</u>

The objective of the embodiment of the present application is to provide a method and device for using preambles.
The embodiment of the present application provides a method for providing preambles in an OLT device, wherein the method comprises:

inserting a first preamble and/or a second preamble in the time-domain sequence of a signal to be transmitted to an ONU device, wherein the first preamble is used for frame synchronization and coarse estimation of intermediate frequency, and the second preamble is used for fine correction of frequency and recovery of carrier phase;
transmitting the signal containing the first preamble and/or the second preamble to the ONU device.

The embodiment of the present application provides a method for using preambles in an ONU device, wherein the method comprises:

receiving a signal containing a first preamble and/or a second preamble transmitted by an OLT device, wherein the first preamble is used for frame synchronization and coarse estimation of intermediate frequency, and the second preamble is used for fine correction of frequency and recovery of carrier phase;
performing frame synchronization and coarse estimation of intermediate frequency based on the received first preamble;
performing fine correction of frequency and recovery of carrier phase based on the received second preamble.

The embodiment of the present application provides an OLT device, wherein the OLT device comprises:

means for inserting a first preamble and/or a second preamble in the time-domain sequence of a signal to be transmitted to an ONU device, wherein the first preamble is used for frame synchronization and coarse estimation of intermediate frequency, and the second preamble is used for fine correction of frequency and recovery of carrier phase;
means for transmitting the signal containing the first preamble and/or the second preamble to the ONU device.

The embodiment of the present application provides an ONU device, wherein the ONU device comprises:

means for receiving a signal containing a first preamble and/or a second preamble transmitted by an OLT device, wherein the first preamble is used for frame synchronization and coarse estimation of intermediate frequency, and the second preamble is used for fine correction of frequency and recovery of carrier phase;
means for performing frame synchronization and coarse estimation of intermediate frequency based on the received first preamble;
means for performing fine correction of frequency and recovery of carrier phase based on the received second preamble.

The embodiment of the present application provides an OLT device, wherein the OLT device comprises a processor and a memory with computer programs stored therein, and the following steps are performed when the computer programs are executed by the processor:

inserting a first preamble and/or a second preamble in the time-domain sequence of a signal to be transmitted to an ONU device, wherein the first preamble is used for frame synchronization and coarse estimation of intermediate frequency, and the second preamble is used for fine correction of frequency and recovery of carrier phase;
transmitting the signal containing the first preamble and/or the second preamble to the ONU device.

The embodiment of the present application provides an ONU device, wherein the ONU device comprises a processor and a memory with computer programs stored therein, and the following steps are performed when the computer programs are executed by the processor:

receiving a signal containing a first preamble and/or a second preamble transmitted by an OLT device, wherein the first preamble is used for frame synchronization and coarse estimation of intermediate frequency, and the second preamble is used for fine correction of frequency and recovery of carrier phase;
performing frame synchronization and coarse estimation of intermediate frequency based on the received first preamble;
performing fine correction of frequency and recovery of carrier phase based on the received second preamble.

The embodiment of the present application provides a computer readable storage medium with computer programs stored therein, wherein the following steps are performed when the computer programs are executed by an OLT device:

inserting a first preamble and/or a second preamble in the time-domain sequence of a signal to be transmitted to an ONU device, wherein the first preamble is used for frame synchronization and coarse estimation of intermediate frequency, and the second preamble is used for fine correction of frequency and recovery of carrier phase;
transmitting the signal containing the first preamble and/or the second preamble to the ONU device.

The embodiment of the present application provides a computer readable storage medium with computer programs stored therein, wherein the following steps are performed when the computer programs are executed by an ONU device:

receiving a signal containing a first preamble and/or a second preamble transmitted by an OLT device, wherein the first preamble is used for frame synchronization and coarse estimation of intermediate frequency, and the second preamble is used for fine correction of frequency and recovery of carrier phase;
performing frame synchronization and coarse estimation of intermediate frequency based on the received first preamble;
performing fine correction of frequency and recovery of carrier phase based on the received second preamble.

In comparison with the prior art, the embodiment of the present application has the following advantages: by inserting two kinds of preambles in the time-domain sequence of a signal to be transmitted to an ONU device to assist the ONU device in frequency and phase estimation, the optical power of the effective signal will not be reduced with the way of inserting preambles in the time-domain sequence; the method according to this embodiment is easy to implement and has low computational complexity; by inserting a number of '0' symbols before and after the reference-data-carrying symbols in the second preamble, inter-symbol interference is avoided.

Description of the Drawings

Through reading the detailed description of the non-limiting embodiments with reference to the following drawings, other features, objects and advantages of the present invention will become more obvious:

Fig. 1 shows the flowchart of a method for using preambles in accordance with the embodiment of the present application;
Fig. 2 shows the schematic view of the structure of the exemplary preambles in accordance with the embodiment of the present application;
Fig. 3(a) shows the schematic view of the inner structure of the exemplary first preamble in accordance with the embodiment of the present application;
Fig. 3(b) shows the schematic view of the inner structure of the exemplary second preamble in accordance with the embodiment of the present application;
Fig. 4 shows the schematic view of an exemplary system experiment in accordance with the embodiment of the present application;
Fig. 5(a) shows the schematic view of the structure of the second preamble in the system experiment in accordance with the embodiment of the present application;
Fig. 5(b) shows the 16QAM constellation diagram in the system experiment in accordance with the embodiment of the present application;
Fig. 6(a) shows the schematic view of the result of performing frame synchronization using the first preamble in accordance with the embodiment of the present application;
Fig. 6(b) shows the schematic view of the result of performing coarse estimation of intermediate frequency using the first preamble in accordance with the embodiment of the present application;
Fig. 7(a) shows the constellation diagram of the signal received before and after performing phase recovery using the second preamble in accordance with the embodiment of the present application;
Fig. 7(b) shows the schematic view of the phase change with time before and after performing fine correction of frequency in accordance with the embodiment of the present application;
Fig. 8 shows the schematic view of the structure of the OLT device and the ONU device in accordance with the embodiment of the present application.

The same or similar reference numbers in the drawings represent the same or similar parts.

Detailed Description of the Embodiments

Before discussing example embodiments in more detail, it is noted that some example embodiments are described as processes or methods depicted as flowcharts. Although the flowcharts describe the operations as sequential processes, many of the operations may be executed in parallel, concurrently, or simultaneously. In addition, the order of operations may be re-arranged. The processes may be terminated when their operations are completed, but may also have additional steps not included in the drawings. The processes may correspond to methods, functions, procedures, subroutines, subprograms, etc.

Methods discussed hereinafter, some of which are illustrated by the flowcharts, may be implemented by hardware, software, firmware, middleware, microcode, hardware description languages, or any combination thereof. When implemented by software, firmware, middleware or microcode, the program code or code segments used to carry out the necessary tasks may be stored in a machine or computer readable medium, such as a storage medium. A processor(s) may carry out the necessary tasks.

The specific structural and functional details disclosed herein are merely representative and serve the purpose of describing example embodiments of the present invention. However, the present invention may be embodied in many alternative forms, and should not be construed as limited to only the embodiments set forth herein.

It will be understood that although the terms 'first', 'second', etc. may be used herein to describe various elements, these elements should not be limited by these terms. These terms are used only to distinguish one element from another. For example, a first element could be termed a second element, and, similarly, a second element could be termed a first element, without departing from the scope of example embodiments. As used herein, the term 'and/or' includes any and all combinations of one or more of the associated items that are listed.

It will be understood that when an element is referred to as being 'connected' or 'coupled' to another element, it can be directly connected or coupled to the other element, or intervening elements may be present. In contrast, when an element is referred to as being 'directly connected' or 'directly coupled' to another element, there are no intervening elements present. Other words used to describe the relationship between elements should be interpreted in a like fashion (*e.g.,* 'between' versus 'directly between', 'adjacent' versus 'directly adjacent', etc.).

The terminology used herein is for the purpose of describing particular embodiments only and is not intended to be limiting of example embodiments. As used herein, the singular forms 'a', 'an' and 'the' are intended to include the plural forms as well unless clearly indicated otherwise in the context. It will be further understood that the terms 'comprises', 'comprising', 'includes' and/or 'including', when used herein, specify the presence of the stated features, integers, steps, operations, elements and/or components, and do not preclude the presence or addition of one or more other features, integers, steps, operations, elements, components and/or combinations thereof.

It should also be noted that in some alternative implementations, the functions/acts mentioned may occur out of the order denoted in the figures. For example, two figures shown in succession may actually be executed substantially simultaneously or may sometimes be executed in the reverse order, depending upon the functions/acts involved.

Unless otherwise defined, all terms (including technological and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the related art and will not be interpreted in an idealized or overly formal sense unless expressly so defined herein.

The present invention will be described in more detail in the following in connection with the drawings.

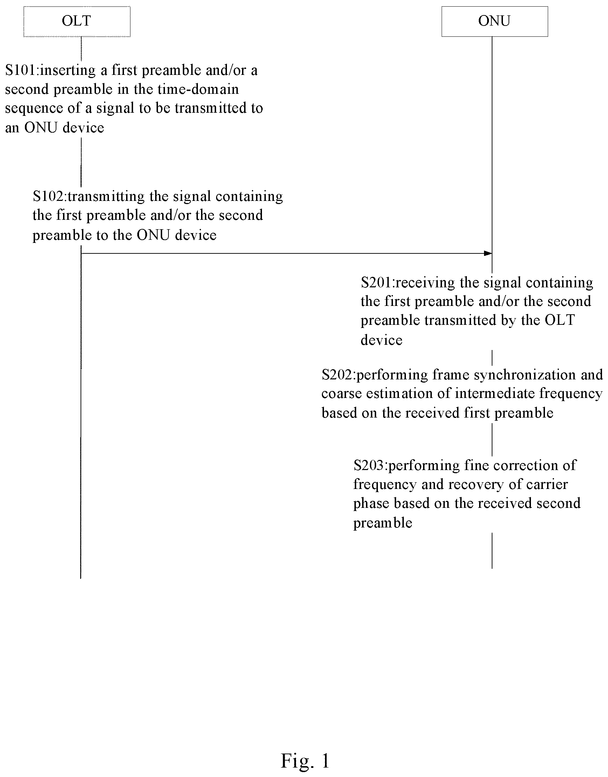

Fig. 1 shows the flowchart of a method for using preambles in accordance with the embodiment of the present application. The said method comprises step S101 and step S102 executed by an OLT device and step S201, step S202 and step S203 executed by an ONU device.

Wherein, the OLT device and ONU device in accordance with the embodiment of the present application are included in a coherent passive optical network (PON).

In step S101, a first preamble and/or a second preamble are inserted in the time-domain sequence of a signal to be transmitted to an ONU device.

Wherein, the first preamble is used for frame synchronization and coarse estimation of intermediate frequency.

Wherein, the second preamble is used for fine correction of frequency and recovery of carrier phase.

In accordance with an embodiment, the rules of setting up the first preamble include: the first preamble contains a number of symbol blocks, each symbol block contains a number of symbols, the symbols in the first half of a symbol block are the same as those in the second half, and all the symbol blocks are modulated and output in both X-axis polarization and Y-axis polarization.

In accordance with an embodiment, the rules of setting up the second preamble include: a number of '0' symbols are inserted before and after the reference-data-carrying symbols in the second preamble; a small modulation level is employed for the data symbols of the second preamble; the second preamble is transmitted periodically.

In step S102, the OLT device transmits the signal containing the first preamble and/or the second preamble to the ONU device.

In step S201, the ONU device receives the signal containing the first preamble and/or the second preamble transmitted by the OLT device.

In step S202, the ONU device performs frame synchronization and coarse estimation of intermediate frequency based on the received first preamble.

In accordance with an embodiment, step S202 comprises step S2021 and step S2022.

In step S2021, with regards to the received first preamble, frame synchronization is performed by calculating the Euclidean distance of signal vectors in a sliding window.

In step S2022, fast Fourier transform (FFT) algorithm is performed using the first preamble, and intermediate frequency is coarsely estimated by peak searching in frequency domain.

In step S203, the ONU device performs fine correction of frequency and recovery of carrier phase based on the received second preamble.

In accordance with an embodiment, said step S203 comprises step S2031 and step S2032.

In step S2031, with regards to the received periodic second preamble, phase related information is extracted from the periodic second preamble.

In step S2032, based on the phase related information, the mean phase in the second preamble is calculated to recover carrier phase, and the phase change between adjacent second preambles is calculated to finely correct the frequency offset.

In accordance with an embodiment, said method comprises step S100 executed by an OLT device.

In step S100, the transmitting rules of the first preamble and the second preamble are configured so as to transmit the signal containing the first preamble and/or the second preamble to the ONU device based on the transmitting rules.

Said transmitting rules include various rules instructing how to transmit the first preamble and the second preamble to an ONU device. For example, the transmitting conditions, transmitting frequencies, etc. regarding the first preamble and the second preamble may be specified in the transmitting rules.

In accordance with an embodiment, the method comprises step S204 performed by an ONU device. Said step S102 comprises step S1021 and step S1022.

In step S204, when a frequency tracking error occurs, the ONU device transmits a retransmission request to the OLT device to request the OLT device to retransmit the first preamble.

In step S1021, with regards to the first preamble, a signal containing the first preamble is transmitted to the ONU device in response to the registration request or retransmission request from that ONU device.

In step S1022, with regards to the second preamble, a signal containing the second preamble is transmitted periodically to the ONU device.

In accordance with the method of the embodiment of the present application, by inserting two kinds of preambles in the time-domain sequence of a signal to be transmitted to an ONU device to assist the ONU device in frequency and phase estimation, the optical power of the effective signal will not be reduced with the way of inserting preambles in the time-domain sequence; the method according to this embodiment is easy to implement and has low computational complexity; by inserting a number of '0' symbols before and after the reference-data-carrying symbols in the second preamble, inter-symbol interference is avoided.

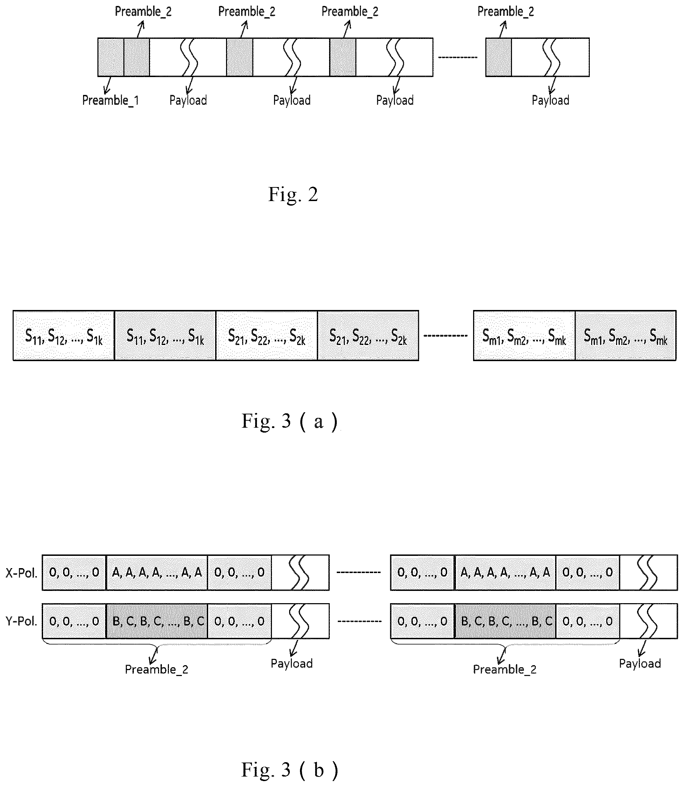

The preambles of the embodiment of the present application are explained in the following with Fig. 2 and Fig. 3.

Fig. 2 shows the schematic view of the structure of the exemplary preambles in accordance with the embodiment of the present application.

Fig. 3(a) and Fig. 3(b) show respectively the schematic views of the inner structure of the exemplary first preamble and second preamble in accordance with the embodiment of the present application.

The first preamble and second preamble according to this example are represented respectively as Preamble_1 and Preamble_2. The structure of the time-domain sequence of a transmitted signal containing Preamble_1, Preamble_2 and payload is as shown in Fig. 2.

The transmitting rules of Preamble_1 and Preamble_2 configured in an OLT device are as follows:

In response to the registration request or retransmission request from an ONU device, the OLT device transmits a signal containing Preamble_1 to the ONU device. Furthermore, the OLT device transmits a signal containing the second preamble periodically to the ONU device.

According to the aforementioned rules, when the ONU device begins the access process, the OLT device transmits preamble_1 and preamble_2 to the ONU device. After the ONU device coarsely estimates the intermediate frequency using preamble_1, the OLT device transmits only preamble_2 periodically. Furthermore, when the frequency offset is too large for the ONU to lock the frequency, the ONU device transmits a retransmission request to the OLT to request the retransmission of preamble_1.

Furthermore, Preamble_1 and Preamble_2 are set up respectively as follows:

Preamble_1: with reference to Fig. 3(a), this Preamble_1 contains $m$ symbol blocks, each symbol block contains $k$ symbols, the symbols in the first half of a symbol block are the same as those in the second half, and all the symbol blocks are modulated and output in both X-axis polarization and Y-axis polarization;

Based on the received Preamble_1, the ONU device performs frame synchronization by calculating the Euclidean distance of signal vectors in a sliding window according to the formula below:

$$E(n) = \sum_{t=1}^{m} \rho(r_t(n+1:n+k), r_t(n+k+1:n+2k)) \quad (1)$$

wherein $t$ represents the numbering of the symbol blocks, $r_t(n+1:n+k)$ and $r_t(n+k+1:n+2k)$ represent the vectors composed respectively of the first half and second half of the symbol block in the sliding window, and $\rho$ represents the Euclidean distance of the two vectors. Furthermore, the ONU device performs fast Fourier transform (FFT) algorithm using Preamble_1 and coarsely estimates the intermediate frequency through the method of peak searching in frequency domain.

Preamble_2: with reference to Fig. 3(b), a number of '0' symbols are inserted before and after the reference-data-carrying symbols in Preamble_2 to avoid inter-symbol interference (ISI); a small modulation level (e.g., 0 (continuous wave) or 1 (binary phase-shift keying)) is employed for the data symbols of Preamble_2, which makes the combined signal from two polarizations very simple and makes it easy to extract phase information therefrom. In the example shown in Fig. 3(b), the 'A' symbols are modulated in X-polarization and the 'B' and 'C' symbols are modulated in Y-polarization.

The ONU device extracts phase related information from the received Preamble_2 and calculates the mean phase in Preamble_2 to recover carrier phase. Furthermore, the ONU device calculates the phase change between adjacent Preamble_2s to finely correct the frequency offset based on the formula below:

$$\Delta f = \frac{\Delta \varphi * Baud\_Rate}{2\pi * n\_sym} \qquad (2)$$

wherein $\Delta\varphi$ represents the phase change between adjacent Preamble_2, *Baud_Rate* represents the Baud rate of the signal, and *n_sym* represents the number of symbols between adjacent Preamble_2s.

The embodiment of the present application is explained in the following in connection with an exemplary experiment.

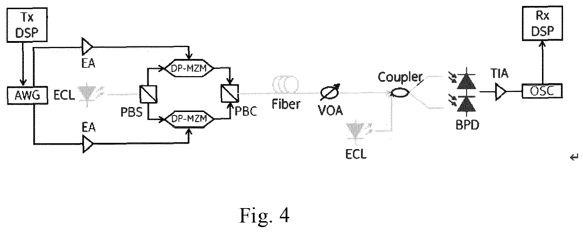

Fig. 4 shows the schematic view of an exemplary system experiment in accordance with the embodiment of the present application.

Alamouti coding and the simplified heterodyne coherent receiver are used in the system experiment of this example to implement a 100 Gb/s/λ coherent PON. As shown in Fig. 4, the experimental system comprises:
A coherent transmitter as the transmitting end in this experiment, which coherent transmitter comprises a digital signal processor (shown as Tx DSP in the figure), an arbitrary waveform generator (AWG), an external cavity laser (ECL), two electrical amplifiers (EA), a polarization beam splitter (PBS), a polarization beam combiner (PBC) and two dual parallel Mach-Zehnder modulators (DP-MZM).

A low-complexity coherent receiver id adopted as the receiving end in this experiment, the coherent receiver comprises a digital signal processor (shown as Rx DSP in the figure), an external cavity laser (ECL), a 2x2 light coupler and balanced photodetector (BPD), an oscilloscope (OSC) and a trans-impedance amplifier (TIA).

Furthermore, the parameters of the experiment are set up as shown in the Table 1 below:

Table 1

| Transmitting End (Tx) Parameters | | Receiving End (Rx) Parameters | |
|---|---|---|---|
| AWG Sampling Rate | 120 GSa/s | OSC Sampling Rate | 160 GSa/s |
| LO Wavelength | 1550.04 nm | LO Wavelength | 1550.24 nm |
| LO Linewidth | 100 kHz | LO Linewidth | 100 kHz |
| DP-MZM Bandwidth | 23 GHz | BPD Bandwidth | 43 GHz |
| Modulation Pattern | 16QAM | Fiber Length | 20 km |
| Signal Baud Rate | 25 GBaud/s | | |

The hardware part of the transmitter of the coherent transmitting end in this experiment is set up in the same fashion as the coherent transmitters in the common optical core networks. However, in order to achieve polarization-insensitive reception in the receiver, Alamouti coding is carried out in the Tx DSP, which groups the symbols in pairs and codes them orthogonally over two polarization states as follows:

$$[s_1, s_2, s_3, s_4 \ldots] \rightarrow \begin{bmatrix} s_1 & -s_2^* \\ s_2 & s_1^* \end{bmatrix} \quad \begin{matrix} s_3 & -s_4^* \\ s_4 & s_3^* \end{matrix} \ldots \,\Big] = \begin{bmatrix} E_x \\ E_y \end{bmatrix} (3)$$

wherein $s_1$, $s_2$, $s_3$, $s_4$ represent the transmitted symbols, * represents complex conjugate, and $E_x$ and $E_y$ represent respectively the electric fields in X-axis and Y-axis polarizations.

It should be noted that in order to ensure the low complexity of the coherent receiver, the transmitted signal should be Alamouti coded. Furthermore, heterodyne reception should be maintained in order to recover in-phase information and quadrature information from the receive signal. After being sampled by the oscilloscope, the signal undergoes resampling, frame synchronization, frequency and phase recovery, equalization and like processes in the Rx DSP.

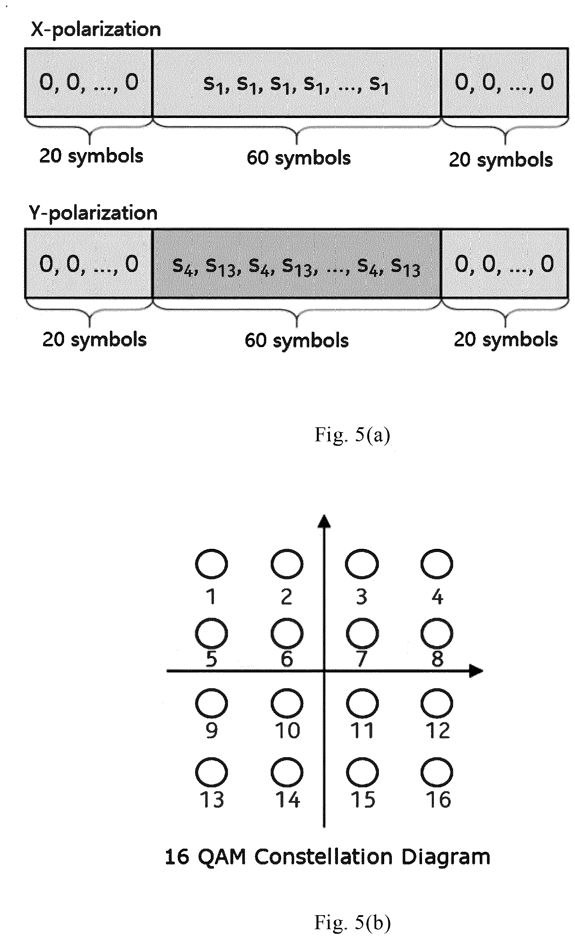

Similar to the embodiment described above with reference to Fig. 2 and Fig.3, the first preamble and second preamble in this experiment are represented respectively as Preamble_1 and Preamble_2. Furthermore, Preamble_1 and Preamble 2 are set up respectively as follows:
Preamble_1: Preamble_1 contains 100 symbol blocks, 1e4 (1×10^4) symbols in total. The inner structure of Preamble_1 is as shown in Fig. 3(a) above, in which the first half of the symbol block is the same as the second half, and the data therein are the randomly selected points in the 16QAM constellation diagram as shown in Fig. 5(b). All the symbol blocks are modulated and output in both X-axis polarization and Y-axis polarization; base on the received Preamble_1, the Rx DSP at the receiving end calculates the Euclidean distance of the signal vectors in the sliding window according to the aforementioned Formula (1) to perform frame synchronization.

Preamble_2: the structure of Preamble_2 in X-axis polarization and Y-axis polarization is as shown in Fig. 5(a). Preamble_2 contains 100 symbol blocks, in which the first 20 symbols and the last 20 symbols are '0's that are used to protect the data-carrying symbols in the middle from inter-symbol interference (ISI). The middle symbols in X-axis polarization carry the symbol '$S_1$' while those in Y-axis polarization carry the symbols '$S_4$' and '$S_{13}$'.

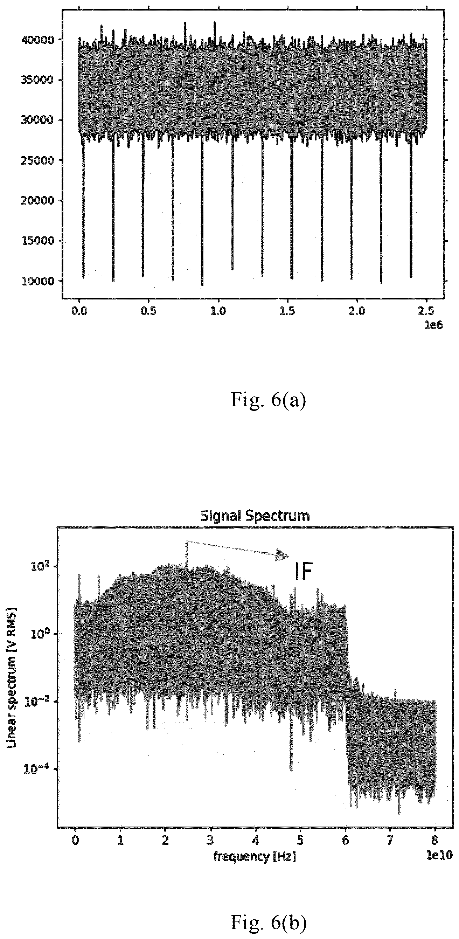

The results of frame synchronization and coarse estimation of intermediate frequency using Preamble_1 in the experiment described above are shown respectively in Fig. 6(a) and Fig. 6(b). Fig. 6(a) shows the result of calculating the Euclidean distance of the signal vectors in the sliding window using the aforementioned Formula (1). Wherein, the starting point of a frame can be easily detected through searching the minimum value. Fig. 6(b) shows the signal spectrum of performing fast Fourier transform (FFT) algorithm and performing coarse estimation of intermediate frequency through the method of peak searching in frequency domain. The intermediate frequency is located at the position denoted by 'IF' in the figure.

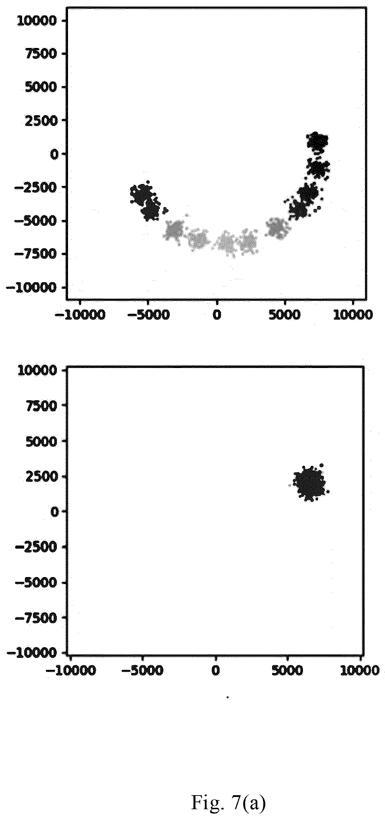

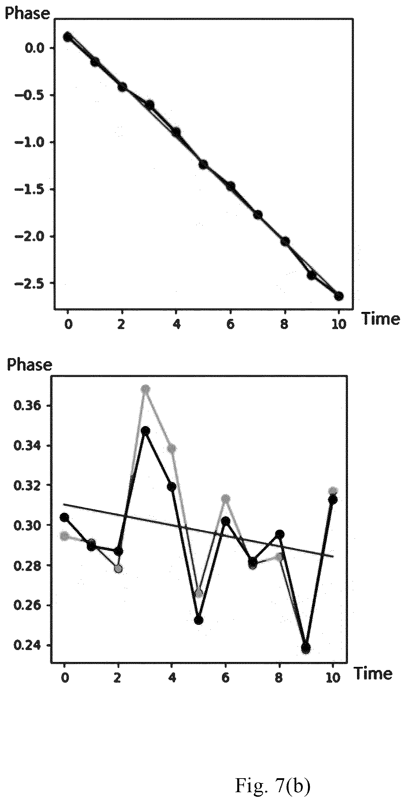

Fig. 7(a) and Fig. 7(b) show respectively the results of recovery of carrier phase and fine correction of frequency using Preamble_2 in the experiment described above.

Wherein, Fig. 7(a) shows the constellation diagram of the signal received before and after performing phase recovery, and Fig. 7(b) shows the phase change with time before and after performing fine correction of frequency.

Wherein, 11 Preamble_2s are measured to obtain the mean phase of each Preamble_2. The recovery of carrier phase as shown in Fig. 7(a) can be achieved by compensating for the phase difference with the values of these mean phases. Furthermore, the frequency offset can be corrected accurately by means of the phase change as shown in Fig. 7(b).

It can be seen from the result of the 100 Gb/s/λ coherent PON system experiment that the frequency and phase of the signal can be estimated accurately in the high-speed coherent PON with the scheme of the embodiment of the present application.

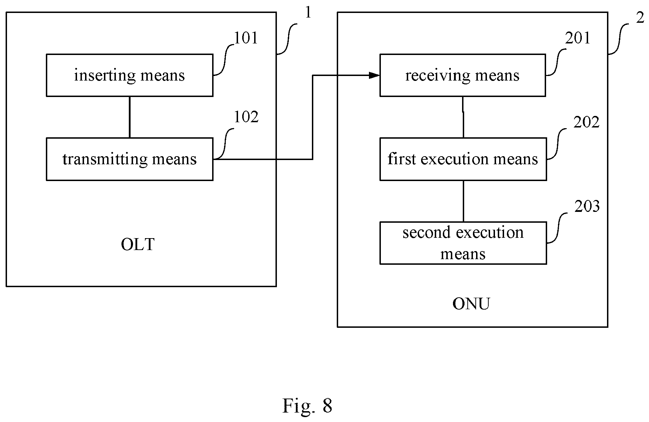

Fig. 8 shows the schematic view of the structure of the OLT device and the ONU device in accordance with the embodiment of the present application.

Wherein, the OLT device comprises: means for inserting a first preamble and/or a second preamble in the time-domain sequence of a signal to be transmitted to an ONU device (hereinafter referred simply as 'inserting means 101'); and means for transmitting the signal containing the first preamble and/or the second preamble to the ONU device (hereinafter referred simply as 'transmitting means 102').

Wherein, the ONU device comprises: means for receiving a signal containing a first preamble and/or a second preamble transmitted by an OLT device (hereinafter referred simply as 'receiving means 201'); means for performing frame synchronization and coarse estimation of intermediate frequency based on the received first preamble (hereinafter referred simply as 'first execution means 202'); means for performing fine correction of frequency and recovery of carrier phase based on the received second preamble (hereinafter referred simply as 'second execution means 203').

Wherein, the OLT device and the ONU device in accordance with the embodiment of the present application are included in a coherent passive optical network (PON).

The inserting means 101 inserts a first preamble and/or a second preamble in the time-domain sequence of a signal to be transmitted to an ONU device.

Wherein, the first preamble is used for frame synchronization and coarse estimation of intermediate frequency.

Wherein, the second preamble is used for fine correction of frequency and recovery of carrier phase.

In accordance with an embodiment, the rules of setting up the first preamble include: the first preamble contains a number of symbol blocks, each symbol block contains a number of symbols, the symbols in the first half of a symbol block are the same as those in the second half, and all the symbol blocks are modulated and output in both X-axis polarization and Y-axis polarization.

In accordance with an embodiment, the rules of setting up the second preamble include: a number of '0' symbols are inserted before and after the reference-data-carrying symbols in the second preamble; a small modulation level is employed for the data symbols of the second preamble; the second preamble is transmitted periodically.

The transmitting means 102 transmits the signal containing the first preamble and/or the second preamble to the ONU device.

The receiving means 201 receives the signal containing the first preamble and/or the second preamble transmitted by the OLT device.

The first execution means 202 performs frame synchronization and coarse estimation of intermediate frequency based on the received first preamble.

In accordance with an embodiment, with regards to the received first preamble, the first execution means 202 performs frame synchronization by calculating the Euclidean distance of signal vectors in a sliding window. Furthermore, the first execution means 202 performs fast Fourier transform algorithm using the first preamble and coarsely estimates the intermediate frequency by peak searching in frequency domain.

The second execution means 203 performs fine correction of frequency and recovery of carrier phase based on the received second preamble.

In accordance with an embodiment, with regards to the received periodic second preamble, the second execution means 203 extracts phase related information from the periodic second preamble. Furthermore, based on the phase related information, the second execution means 203 calculates the mean phase in the second preamble to recover carrier phase and calculates the phase change between adjacent second preambles to finely correct the frequency offset.

In accordance with an embodiment, the OLT device comprises means for configuring the transmitting rules of the first preamble and the second preamble so as to transmit the signal containing the first preamble and/or the second preamble to the ONU device based on the transmitting rules (hereinafter referred simply as 'rule configuring means').

The rule configuring means configures the transmitting rules of the first preamble and the second preamble so as to transmit the signal containing the first preamble and/or the second preamble to the ONU device based on the transmitting rules.

Said transmitting rules include various rules instructing how to transmit the first preamble and the second preamble to an ONU device. For example, the transmitting conditions, transmitting frequencies, etc. regarding the first preamble and the second preamble may be specified in the transmitting rules.

In accordance with an embodiment, the ONU device comprises means for transmitting a retransmission request to the OLT device when a frequency tracking error occurs to request the OLT device to retransmit the first preamble (hereinafter referred simply as 'retransmission requesting means').

When a frequency tracking error occurs, the retransmission requesting means transmits a retransmission request to the OLT device to request the OLT device to retransmit the first preamble.

With regards to the first preamble, the transmitting means 102 transmits a signal containing the first preamble to the ONU device in response to the registration request or retransmission request from that ONU device.

With regards to the second preamble, the transmitting means 102 transmits a signal containing the second preamble periodically to the ONU device.

In accordance with the scheme of the embodiment of the present application, by inserting two kinds of preambles in the time-domain sequence of a signal to be transmitted to an ONU device to assist the ONU device in frequency and phase estimation, the optical power of the effective signal will not be reduced with the way of inserting preambles in the time-domain sequence; the method according to this embodiment is easy to implement and has low computational complexity; by inserting a number of '0' symbols before and after the reference-data-carrying symbols in the second preamble, inter-symbol interference is avoided.

The software program of the present invention may be executed by a processor to implement the steps or functions described hereinabove. Likewise, the software program of the present invention (including the relevant data structures) may be stored in a computer readable recording medium, for example, a RAM memory, a magnetic or optical driver, or a floppy disk, and other similar devices. In addition, some steps or functions of the present invention may be implemented by hardware, for example, as a circuit cooperating with a processor to execute various functions or steps.

Additionally, a portion of the present invention may be applied as a computer program product, for example, computer program instructions which, when executed by a computer, may invoke or provide the methods and/or technical solutions in accordance with the present invention through operations of the computer. Furthermore, the program instructions invoking the method of the present invention may be stored in a fixed or mobile recording medium, and/or transmitted through broadcast or data flow in other signal bearing media, and/or stored in a working memory of a computer device which operates according to the program instructions. Here, one embodiment according to the present invention comprises an apparatus comprising a memory for storing computer program instructions and a processor for executing the program instructions, wherein the computer program instructions, when executed by the processor, trigger the apparatus to run the methods and/or technical solutions according to a plurality of embodiments of the present invention.

To those skilled in the art, it is apparent that the present invention is not limited to the details of the illustrative embodiments mentioned above, and can be implemented in other specific forms without departing from the spirit or basic features of the present invention. Therefore, from any perspective, the embodiments should be regarded as illustrative and not restrictive. The scope of the present invention is defined by the appended claims and not the depiction above. Therefore, all variations within the meaning and scope of equivalent elements of the claims are intended to be encompassed within the present invention. No reference numerals in the claims should be regarded as limiting the involved claims. In addition, it is apparent that the word "comprise" or "include" does not exclude other units or steps, and singularity does not exclude plurality. A plurality of units or apparatuses stated in a system claim may also be implemented by a single unit or apparatus through software or hardware. Words like 'first' and 'second' are used to indicate names and not to indicate any specific order.

**Claims**

1. A method for providing preambles in an OLT device (1), wherein the method comprises:

inserting (S101) a first preamble (Preamble_1) and/or a second preamble (Preamble_2) in a time-domain sequence of a signal to be transmitted to an ONU device (2), wherein the first preamble (Preamble_1) is used for frame synchronization and coarse estimation of intermediate frequency, and the second preamble (Preamble_2) is used for fine correction of frequency and recovery of carrier phase;
transmitting (S102) the signal containing the first preamble (Preamble_1) and/or the second preamble (Preamble_2) to the ONU device (2).

2. The method according to claim 1, wherein the method comprises:
configuring the transmitting rules of the first preamble and the second preamble so as to transmit the signal containing the first preamble and/or the second preamble to the ONU device (2) based on the transmitting rules.

3. The method according to claim 1 or 2, wherein the method comprises:

with regards to the first preamble, transmitting a signal containing the first preamble to the ONU device (2) in response to the registration request or retransmission request from that ONU device (2);
with regards to the second preamble, transmitting a signal containing the second preamble periodically to the ONU device (2).

4. The method according to claim 1 or 2, wherein the rules of setting up the structure of the first preamble (Preamble_1) include:
the first preamble (Preamble_1) contains a number of symbol blocks, each symbol block contains a number of symbols, the symbols in the first half of a symbol block are the same as those in the second half, and all the symbol blocks are modulated and output in both X-axis polarization and Y-axis polarization.

5. The method according to claim 1 or 2, wherein the rules of setting up the structure of the second preamble include:

a number of '0' symbols are inserted before and after the reference-data-carrying symbols in the second preamble;
a small modulation level is employed for the data symbols of the second preamble;
the second preamble is transmitted periodically.

6. A method for using preambles in an ONU device (2), wherein the method comprises:

receiving (S201) a signal containing a first preamble (Preamble_1) and/or a second preamble (Preamble_2) transmitted by an OLT device (1), wherein the first preamble (Preamble_1) is used for frame synchronization and coarse estimation of intermediate frequency, and the second preamble (Preamble_2) is used for fine correction of frequency and recovery of carrier phase;
performing (S202) frame synchronization and coarse estimation of intermediate frequency based on the received first preamble (Preamble_1);
performing (S203) fine correction of frequency and recovery of carrier phase based on the received second preamble (Preamble_2).

7. The method according to Claim 6, wherein the step of performing (S202) frame synchronization and coarse estimation of intermediate frequency based on the received first preamble includes:

with regards to the received first preamble, performing frame synchronization by calculating the Euclidean distance of signal vectors in a sliding window;
performing fast Fourier transform algorithm using the first preamble, and coarsely estimating the intermediate frequency by peak searching in frequency domain.

8. The method according to Claim 6, wherein the step of performing (S203) fine correction of frequency and recovery of carrier phase based on the received second preamble (Preamble_2) includes:

with regards to the received periodic second preamble, extracting phase related information from the periodic second preamble;
based on the phase related information, calculating the mean phase in the second preamble to recover carrier phase, and calculating the phase change between adjacent second preambles to finely correct the frequency offset.

**9.** The method according to any of claims 6 to 8, wherein the method comprises:
when a frequency tracking error occurs, transmitting a retransmission request to the OLT device (1) to request the OLT device (1) to retransmit the first preamble.

**10.** An OLT device (1), wherein the OLT device (1) comprises:

means (101) for inserting a first preamble (Preamble_1) and/or a second preamble (Preamble_2) in the time-domain sequence of a signal to be transmitted to an ONU device (2), wherein the first preamble (Preamble_1) is used for frame synchronization and coarse estimation of intermediate frequency, and the second preamble (Preamble_2) is used for fine correction of frequency and recovery of carrier phase;
means (102) for transmitting the signal containing the first preamble (Preamble_1) and/or the second preamble (Preamble_2) to the ONU device (2).

**11.** An ONU device (2), wherein the ONU device (2) comprises:

means (201) for receiving a signal containing a first preamble (Preamble_1) and/or a second preamble (Preamble_2) transmitted by an OLT device (1), wherein the first preamble (Preamble_1) is used for frame synchronization and coarse estimation of intermediate frequency, and the second preamble (Preamble_2) is used for fine correction of frequency and recovery of carrier phase;
means (202) for performing frame synchronization and coarse estimation of intermediate frequency based on the received first preamble (Preamble_1);
means (203) for performing fine correction of frequency and recovery of carrier phase based on the received second preamble (Preamble _2).

**12.** An OLT device (1), wherein the OLT device (1) comprises a processor and a memory with computer programs stored therein, and the following steps are performed when the computer programs are executed by the processor:

inserting (S101) a first preamble (Preamble_1) and/or a second preamble (Preamble_2) in the time-domain sequence of a signal to be transmitted to an ONU device (2), wherein the first preamble (Preamble_1) is used for frame synchronization and coarse estimation of intermediate frequency, and the second preamble (Preamble_2) is used for fine correction of frequency and recovery of carrier phase;
transmitting (S102) the signal containing the first preamble (Preamble_1) and/or the second preamble (Preamble_2) to the ONU device (2).

**13.** An ONU device (2), wherein the ONU device (2) comprises a processor and a memory with computer programs stored therein, and the following steps are performed when the computer programs are executed by the processor:

receiving (S201) a signal containing a first preamble (Preamble_1) and/or a second preamble (Preamble_2) transmitted by an OLT device (1), wherein the first preamble (Preamble_1) is used for frame synchronization and coarse estimation of intermediate frequency, and the second preamble (Preamble_2) is used for fine correction of frequency and recovery of carrier phase;
performing (S202) frame synchronization and coarse estimation of intermediate frequency based on the received first preamble (Preamble_1);
performing (S203) fine correction of frequency and recovery of carrier phase based on the received second preamble (Preamble_2).

**14.** A computer readable storage medium with computer programs stored therein, wherein the following steps are performed when the computer programs are executed by an OLT device (1):

inserting (S101) a first preamble (Preamble_1) and/or a second preamble (Preamble_2) in the time-domain sequence of a signal to be transmitted to an ONU device (2), wherein the first preamble (Preamble_1) is used for frame synchronization and coarse estimation of intermediate frequency, and the second preamble (Preamble_2) is used for fine correction of frequency and recovery of carrier phase;
transmitting (S102) the signal containing the first preamble (Preamble_1) and/or the second preamble (Preamble_2) to the ONU device (2).

**15.** A computer readable storage medium with computer programs stored therein, wherein the following steps are performed when the computer programs are executed by an ONU device (2):

receiving (S201) a signal containing a first preamble (Preamble_1) and/or a second preamble (Preamble_2) transmitted by an OLT device (1), wherein the first preamble (Preamble_1) is used for frame synchronization and coarse estimation of intermediate frequency, and the second preamble (Preamble_2) is used for fine correction of frequency and recovery of carrier phase;

performing (S202) frame synchronization and coarse estimation of intermediate frequency based on the received first preamble (Preamble_1);

performing (S203) fine correction of frequency and recovery of carrier phase based on the received second preamble (Preamble_2).

| OLT | | ONU |
|---|---|---|

S101:inserting a first preamble and/or a
second preamble in the time-domain
sequence of a signal to be transmitted to
an ONU device

S102:transmitting the signal containing
the first preamble and/or the second
preamble to the ONU device

S201:receiving the signal containing
the first preamble and/or the second
preamble transmitted by the OLT
device

S202:performing frame synchronization and
coarse estimation of intermediate frequency
based on the received first preamble

S203:performing fine correction of
frequency and recovery of carrier
phase based on the received second
preamble

Fig. 1

Fig. 2

Fig. 3 ( a )

Fig. 3 ( b )

Fig. 4

X-polarization

| 0, 0, ..., 0 | $S_1, S_1, S_1, S_1, ..., S_1$ | 0, 0, ..., 0 |
|:---:|:---:|:---:|
| 20 symbols | 60 symbols | 20 symbols |

Y-polarization

| 0, 0, ..., 0 | $S_4, S_{13}, S_4, S_{13}, ..., S_4, S_{13}$ | 0, 0, ..., 0 |
|:---:|:---:|:---:|
| 20 symbols | 60 symbols | 20 symbols |

Fig. 5(a)

16 QAM Constellation Diagram

Fig. 5(b)

Fig. 6(a)

Fig. 6(b)

Fig. 7(a)

Fig. 7(b)

Fig. 8

Europäisches
Patentamt

European
Patent Office

Office européen
des brevets

# EUROPEAN SEARCH REPORT

**Application Number**

**EP 22 20 6417**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>A | US 2019/280778 A1 (ZHU CHEN [US] ET AL) 12 September 2019 (2019-09-12)<br>* abstract *<br>* paragraphs [0005] – [0009] *<br>* paragraphs [0021] – [0024] *<br>* paragraphs [0027] – [0032] *<br>* figures 2, 6, 7 *<br>----- | 1-4,6, 8-15<br>5,7 | INV.<br>H04B10/272<br>H04B10/61<br>H04Q11/00 |
| A | JP 2011 160022 A (FUJITSU TELECOM NETWORKS LTD) 18 August 2011 (2011-08-18)<br>* paragraph [0010] *<br>----- | 1-15 | |

TECHNICAL FIELDS
SEARCHED      (IPC)

H04B
H04Q

The present search report has been drawn up for all claims

| Place of search | Date of completion of the search | Examiner |
|---|---|---|
| Munich | 10 March 2023 | Rolan Cisneros, E |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

...............................................................................
& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 22 20 6417

This annex lists the patent family members relating to the patent documents cited in the above-mentioned European search report.
The members are as contained in the European Patent Office EDP file on
The European Patent Office is in no way liable for these particulars which are merely given for the purpose of information.

10-03-2023

| Patent document cited in search report | Publication date | Patent family member(s) | Publication date |
|---|---|---|---|
| US 2019280778 A1 | 12-09-2019 | CN 110247712 A<br>US 2019280778 A1 | 17-09-2019<br>12-09-2019 |
| JP 2011160022 A | 18-08-2011 | NONE | |

EPO FORM P0459

For more details about this annex : see Official Journal of the European Patent Office, No. 12/82